# EUROPÄISCHE PATENTSCHRIFT

(11) **EP 1 641 728 B1**
(45) Veröffentlichungstag und Bekanntmachung des Hinweises auf die Patenterteilung: **29.08.2007**
(21) Anmeldenummer: 04727499.8
(22) Anmeldetag: 15.04.2004
(51) Int. Cl.: C04B 35/589, C04B 35/628, F23Q 7/00, B22F 1/02

(54) **VERFAHREN ZUR HERSTELLUNG EINES ISOLIERENDEN KERAMIK-VERBUND-WERKSTOFFES UND ISOLIERENDER KERAMIK-VERBUND-WERKSTOFF**
METHOD FOR PRODUCING AN INSULATING CERAMIC COMPOSITE MATERIAL AND INSULATING CERAMIC COMPOSITE MATERIAL
PROCEDE POUR PRODUIRE UN MATERIAU COMPOSITE CERAMIQUE ISOLANT ET MATERIAU COMPOSITE CERAMIQUE ISOLANT

(30) Priorität: 12.06.2003 DE 10326565
(43) Veröffentlichungstag der Anmeldung: 05.04.2006
(73) Patentinhaber: ROBERT BOSCH GMBH, 70442 Stuttgart (DE)
(72) Erfinder: KOEHNE, Martin, 70806 Kornwestheim (DE)
(86) Internationale Anmeldenummer: PCT/DE2004/000790
(87) Internationale Veröffentlichungsnummer: WO 2004/110955

(56) Entgegenhaltungen:
- DE-A- 2 651 606
- DE-A- 19 857 958
- FR-A- 2 692 911

## Beschreibung

Die Erfindung betrifft einen verbesserten isolierenden Keramik-Verbund-Werkstoff und ein Verfahren zu dessen Herstellung nach dem Oberbegriff der unabhängigen Ansprüche.

### Stand der Technik

Bei der Herstellung von keramischen Glühstiftkerzen aus Keramik-Verbundwerkstoffen werden durch die Pyrolyse von elementorganischen Precursoren amorphe SiOC-Keramiken gewonnen. Vorteile dieses Precursor-Thermolyse-Verfahrens gegenüber den konventionellen Herstellungsverfahren für Keramiken (Sintern) sind die wesentlich niedrigeren Prozesstemperaturen und die einfache Verarbeitbarkeit und Formbarkeit von Polysiloxanharzen.

Um mechanisch stabile Keramikkörper aus siliziumorganischen Polymeren herzustellen, genügen bereits Temperaturen von etwa 800°C, während Sinterpulver meist erst bei Sintertemperaturen oberhalb von 1200°C mechanisch stabile Körper ergeben. Die Herstellung keramischer Festkörper aus gefüllten siliziumorganischen Polymeren erfordert also wesentlich niedrigere Temperaturen als das Sintern keramischer Pulver. Ein solches Verfahren ist beispielsweise aus der EP 0 412 428 B1 bekannt. Dabei wird dem Ausgangspolymeren ein metallischer Füller zugemischt, der mit den bei der Pyrolyse der Polymerverbindungen entstehenden Zersetzungsprodukten reagiert. Bei der Pyrolyse wird bei einer Temperatur im Bereich zwischen 600 bis 1800°C und häufig in einer Inertgasatmosphäre gearbeitet. Als Füllerkomponenten werden u.a. solche aus Chrom, Molybdän, Silizium und intermetallische Verbindungen von Vertretern der vierten bis sechsten Nebengruppe des Periodensystems mit Bor, Silizium oder Aluminium eingesetzt. Diese Füllstoffe sind notwendig, da sonst Schwindungsrisse und übermäßig viele Poren während der Pyrolyse auftreten. Mit Hilfe dieser Füllstoffe ist es möglich, bestimmte Eigenschaften wie z.B. Wärmeausdehnungskoeffizient, Wärmeleitfähigkeit oder den spezifischen elektrischen Widerstand des Komposits genau einzustellen.

Bei der Herstellung eines Keramik-Verbund-Werkstoffes aus einer Precursor-Keramik, wobei als Ausgangsmaterial bspw. ein Polysiloxan, d.h., ein Polymer auf der Basis von Si, C, O und H, verwendet wird, lässt sich demnach durch die Wahl der entsprechenden Füllstoffe das elektrische bzw. physikalische Eigenschaftsprofil des nach der Pyrolyse resultierenden Keramik-Verbund-Werkstoffes exakt auf das jeweilige Anforderungsprofil, bspw. einer keramischen Glühstiftkerze, zuschneiden. Insbesondere ist es auf diese Weise möglich, die elektrische Leitfähigkeit von sehr gut leitend bis isolierend einzustellen. Allerdings gelingt dies bisher nur durch die Variation des Gehaltes an leitfähigem Füllstoff.

Oftmals ist es jedoch notwendig, eine elektrisch isolierende Schicht (Isolationsschicht) direkt mit einer elektrisch leitenden Schicht (Leitschicht) in Kontakt zu bringen. So ist bspw. aus der DE 198 44 347 A1 eine Heizvorrichtung für eine keramische Glühstiftkerze bekannt, die aus einem als keramischer Schichtverbund ausgeführten Glühstift besteht. Der Schichtverbund besteht dabei aus einer isolierenden Kompositkeramikschicht, die zwischen zwei elektrisch leitenden Kompositkeramikschichten liegt. Aufgrund der unterschiedlichen Zusammensetzung einer leitfähigen und einer isolierenden Keramikschicht ergibt sich dabei ein unterschiedliches Materialverhalten, wie z.B. unterschiedliche Wärmeausdehnung, unterschiedliches Schwindungs- und Alterungsverhalten, etc., was dazu führt, dass in dem Komposit Spannungen entstehen können, die einen Bruch bzw. Riss im Komposit verursachen.

DE 198 57 958 A1 offenbart keramische Verbundwerkstoffe aus Siliziumnitrid und Molybdänsilizid für stiftheizer von Glühstiftkerzen.

### Vorteile der Erfindung

Die erfindungsgemäßen isolierenden Keramik-Verbund-Werkstoffe haben gegenüber dem Stand der Technik den Vorteil, dass ihre Materialkennwerte auf einfache Weise an die eines leitfähigen Keramik-Verbund-Werkstoffs angepasst werden können.

Weiterhin ist vorteilhaft, dass sie in Verbindung mit einem leitfähigen Keramik-Verbund-Werkstoff eine deutlich verbesserte Dauerhaltbarkeit aufweisen.
Vorteilhafte Weiterbildungen der Erfindung ergeben sich aus den in den Unteransprüchen genannten Maßnahmen.

So ist bspw. vorteilhaft, wenn das Beschichtungsmaterial ausgewählt ist aus der Gruppe bestehend aus Keramik, Glaskeramik und Glas.

Zusätzliche Vorteile ergeben sich durch die Verwendung von bereits in der Leitschicht vorhandenen Stoffen zur isolierenden Beschichtung der leitfähigen Partikel in der Isolationsschicht.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: die Perkulationskurve für eine Precursorkeramik mit leitfähigen Partikeln; und
- Fig. 2: eine Prinzipskizze der Mechanofusion von in dem erfindungsgemäßen isolierenden Keramik-Verbund-Werkstoff verwendbaren Teilchen.

### Ausführungsbeispiele

Bei der gleichzeitigen Verwendung einer Leit- und einer Isolationsschicht eines Keramik-Verbund-Werkstoffes, wie bspw. bei der Herstellung einer keramischen Glühkerze, ist es wünschenswert, die Materialkennwerte beider Schichten so aufeinander abzustimmen, dass einerseits die elektrische Isolation der Isolationsschicht nicht beeinträchtigt wird und andererseits ein dauerhafter Verbund resultiert.

Dies lässt sich erfindungsgemäß dadurch erreichen, dass auf die leitfähigen Partikel der leitfähigen Precursorkeramik eine elektrisch isolierende Schicht aus elektrisch isolierender Keramik, Glaskeramik oder Glas aufgebracht wird. Auf diese Weise entsteht eine Isolationsschicht, die in ihrer stofflichen Zusammensetzung nahezu exakt der der Leitschicht entspricht, jedoch weiterhin isolierend wirkt. Daneben wird auch eine Erhöhung des elektrischen Widerstands der Isolationsschicht erreicht, was besonders in Bezug auf den Verluststrom und somit dem Wirkungsgrad der Glühstiftkerze vorteilhaft ist. Die leitfähigen Partikel bestehen aus Metallsiliziden, insbesondere Molybdändisilizid, MoSi₂.

Darüber hinaus kann durch Aufbringen einer luftdichten, inerten Schicht auf die elektrisch leitenden Partikel zusätzlich die Widerstandsfähigkeit gegen die sogenannte Pest, d.h., die Oxidation, bspw. von Metallsiliziden wie MoSi₂ bei Temperaturen < 1000°C, sowie auch gegen sonstige Angriffe durch reaktive Spezies, bspw. Kohlenstoff, erheblich verbessert werden. Dabei kann die luftdichte, inerte Schicht aus allen möglichen inerten anorganischen Stoffen oder deren polymeren Precursoren bestehen. Beispiele für solche Stoffe sind SiO₂, TiO₂, ZrO₂, Ta₂O₅, etc. In einer besonders vorteilhaften Ausführungsform der Erfindung werden die leitfähigen Partikel mit weiteren, in der isolierenden Schicht bereits enthaltenen Stoffen, bspw. Al₂O₃, beschichtet, was den Herstellungsprozess weiter vereinfacht.

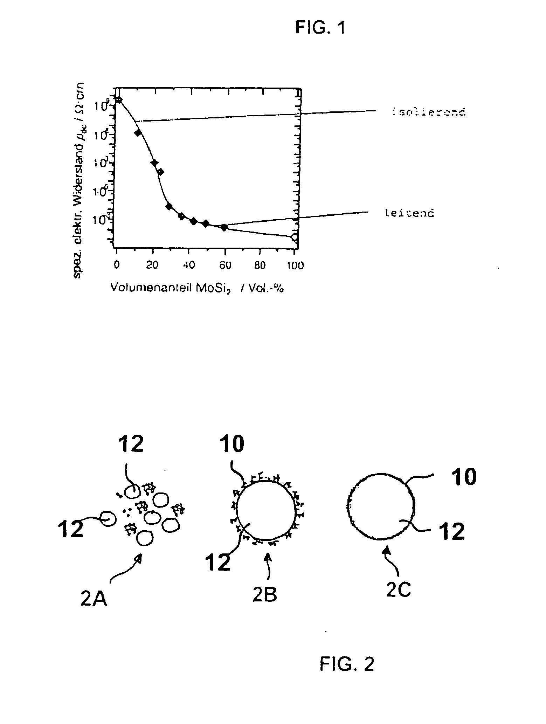

Eine optimale Anpassung der Materialkennwerte, insbesondere von Schwindung, Wärmeausdehnung und Alterungsverhalten, zwischen Isolations- und Leitschicht erfordert auch in der Isolationsschicht den Einsatz von leitfähigen Partikeln, vorteilhafterweise die gleichen Partikel wie in der leitenden Schicht, also z.B. MoSi₂-Partikel. Nur auf diese Weise lassen sich diese Materialkennwerte aneinander annähern, was eine Voraussetzung für einen dauerhaften Verbund ist. Die Grenzen des maximalen Gehalts an MoSi₂ in der Isolationsschicht sind durch die in Fig. 1 dargestellte Perkulationskurve gegeben. Perkulation beschreibt, wann die leitfähigen Partikel in Abhängigkeit ihres Volumenanteils am Gesamtsystem sich einander so nahe kommen, dass es durch Zufallsanordnung zu Leiterbahnen kommt. Dadurch kann vorhergesagt werden, welcher Volumenanteil MoSi₂ für eine leitfähige Keramik notwendig ist. Die Perkulationskurve in Fig. 1 zeigt den elektrischen Widerstand in Abhängigkeit des Voulmenanteils an MoSi₂ für den Fall, dass das MoSi₂ nicht elektrisch isoliert wurde.

Erfindungsgemäß werden isolierend und/oder inert beschichtete leitfähige Partikel, bspw. MoSi₂, für die Herstellung der Isolationsschicht verwendet. Dadurch kann die Zusammensetzung von Leit- und Isolationsschicht identisch gewählt werden, ohne die elektrische Isolation der isolierenden Schicht zu beeinträchtigen. Außerdem kann die Beständigkeit der elektrisch leitfähigen Partikel gegen chemische Angriffe durch die Beschichtung erheblich verbessert werden. Durch die erfindungsgemäße bestmöglichste Abstimmung der beiden Schichten aufeinander werden erhebliche Vorteile bei der Dauerhaltbarkeit von Verbundstoffen aus diesen Schichten erreicht.

Durch eine gleichzeitige oder zusätzliche Inertisierung der elektrisch leitfähigen Partikel mittels der Beschichtung mit inerten Stoffen kann die Dauerhaltbarkeit ebenfalls verbessert werden. Durch die Beschichtung mit inerten Stoffen werden die reaktionsfreudigen leitfähigen Partikel, wie z.B. Metallsilizide, inertisiert.

Für die Herstellung der Isolationsschicht werden leitfähige Partikel, bspw. MoSi₂-Partikel, verwendet, die z.B. mit einem der weiteren Inhaltsstoffe der isolierenden Schicht, wie z.B. Al₂O₃, beschichtet werden. Die Beschichtung kann durch verschiedene Techniken, wie z.B. Beschichtung mit einem polymeren Vorläufer, bspw. Aluminiumethoxid, erfolgen. Besonders vorteilhaft kann hierbei das Mechanofusions-Verfahren (vgl. Figur 2) angewandt werden. Bei diesem Verfahren werden durch die Anwendung einer hohen Aufprallenergie Gastpartikel 10, bspw. Al₂O₃ oder SiO₂, auf einen Wirtspartikel 12, bspw. MoSi₂, aufgetragen, bis der Wirtspartikel 12 mit einer fusionierten, d.h., versinterten Schicht aus Gastpartikeln 10 vollständig umhüllt ist. Die treibende Kraft ist dabei die Verringerung der Oberflächenenergie von individuellen Partikeln durch die Bildung von Partikel/Partikel-Interfaces. Dies läuft in verschiedenen Schritten ab: a) Deglomeration und Annäherung von Gast- 10 und Wirtspartikeln 12, die Oberflächenenergie steigt zunächst an (Fig. 2A); b) Anhaften der Gastpartikel 10 an den Wirtspartikeln 12; Vergrößern der Kontaktfläche durch Deformation aufgrund von Kompression, Aufprall- und Scherkräften; Bildung von chemischen Brücken; Verringerung der Oberflächenenergie (Fig. 2B); und c) Fusion der abgeschiedenen Gastpartikel 10 miteinander unter Bildung einer dichten Schale um den Kern; weitere Verringerung der Oberflächenenergie (Fg. 2C). Das Mechanofusionsverfahren gestattet es, mehrere Schichten mit unterschiedlichen Eigenschaften auf einem Partikel aufzubringen.

Prinzipiell sind als Gastpartikel auch alle anderen isolierenden und/oder inerten Stoffe, wie z.B. ZrO₂, TiO₂, etc., geeignet. Dabei kann auch zunächst mit SiO₂ oder einem anderen gut fusionierenden Gastpartikel beschichtet werden, und im Anschluss mit Al₂O₃ oder einem anderen eher schlecht fusionierenden Material, um eine optimale Fusionierung und somit Verbindung mit dem Wirtspartikel zu erzielen.

Die Neigung eines Materials zum Festkörpersintern (Mechanofusion) wird durch seine Schmelztemperatur gekennzeichnet, so dass diese als grobe Abschätzung für die Fusionseignung herangezogen werden kann (vgl. Stein, J. et al., "Die Herstellung funktionaler Partikel durch Mechanofusion"). Unter einem gut fusionierenden Material wird dabei ein solches verstanden, das einen Schmelzpunkt und eine Partikelgröße aufweist, die die Mechanofusion begünstigen, während ein schlecht fusionierendes Material nur eine geringe Neigung zu Mechanofusion zeigt.

Durch die Fusionierung mit einem gut fusionierbaren Material im ersten Schritt kann dann nachfolgend im zweiten Schritt ein schlecht fusionierbares Material auf diese erste Schicht aufgetragen werden. Ohne die Schicht aus gut fusionierendem Material würde das schlecht fusionierende Materia nicht mit der Partikeloberfläche fusionieren.

Das folgende Beispiel zeigt die Zusammensetzungen einer Leit- und einer Isolationskeramik, deren Materialzusammensetzung durch die erfindungsgemäße Herstellung aneinander angenähert wurden.

### Zusammensetzung der leitenden Schicht:

50-80 Vol.-% Polysiloxan (enthält 0-3 Masse-% Zirkonacetylacetonat)
0-10 Vol.-% SiC
0-20 Vol.-% Al₂O₃
Bis zu 20 Vol.- % MoSi₂

### Zusammensetzung der isolierenden Schicht:

50-80 Vol.-% Polysiloxan (enthält 0-3 Masse-% Zirkonacetylacetonat)
0-20 Vol.-% SiC
0-25 Vol.-% Al₂O₃, abzüglich x Vol.-% Al₂O₃, die für die Beschichtung der MoSi₂-Partikel benutzt werden
bis zu 25 Vol.-% MoSi₂, beschichtet mit x Vol.-% Al₂O₃

In einem Ausführungsbeispiel werden zunächst mit Al₂O₃-Beschichtung versehene MoSi₂-Partikel hergestellt:

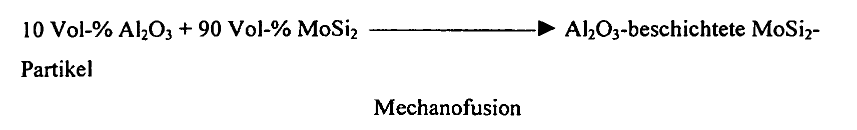

Anschließend wird ein Compound aus 50 Vol-% Polysiloxan, 15 Vol-% SiC, 15 Vol-% Al₂O₃ und 20 Vol-% MoSi₂, beschichtet mit Al₂O₃ (= 18 Vol-% MoSi₂ + 2 Vol-% Al₂O₃) hergestellt. Nach der Formgebung durch Spritzgießen wird abschließend eine Pyrolyse in Argon durchgeführt, wobei die Temperatur um 3K/min erhöht wird, bis eine Temperatur von 1300°C erreicht ist, bei der die gesamte Anordnung noch 10 Stunden gehalten wird.

## Patentansprüche

1. Verfahren zur Herstellung eines isolierenden Keramik-Verbund-Werkstoffs aus einer elektrisch leitenden Precursorkeramik, wobei die Precursorkeramik elektrisch leitende Partikel enthält, **dadurch gekennzeichnet, dass** die elektrisch leitenden Partikel mit einem elektrisch isolierenden Material beschichtet werden, wobei die elektrisch leitenden Partikel aus Metallsiliziden bestehen.

2. Verfahren nach Anspruch 1, **dadurch gekennzeichnet, dass** es sich bei der Precursorkeramik um eine durch Pyrolyse von elementorganischen Precursoren erhaltene amorphe SiOC-Keramik handelt.

3. Verfahren nach Anspruch 1 oder 2, **dadurch gekennzeichnet, dass** das isolierende Material ausgewählt ist aus der Gruppe bestehend aus Keramik, Glaskeramik und Glas.

4. Verfahren nach Anspruch 1 oder 2, **dadurch gekennzeichnet, dass** das isolierende Material ausgewählt ist aus der Gruppe bestehend aus Metalloxiden und Halbmetalloxiden.

5. Verfahren nach Anspruch 4, **dadurch gekennzeichnet, dass** das isolierende Material ausgewählt ist aus der Gruppe bestehend aus SiO₂, Al₂O₃, TiO₂, ZrO₂ und Ta₂O₅.

6. Verfahren nach Anspruch 1, **dadurch gekennzeichnet, dass** das Metallsilizid Molybdändisilizid ist.

7. Verfahren nach einem der vorstehenden Ansprüche, **dadurch gekennzeichnet, dass** die Beschichtung durch Mechanofusion vorgenommen wird.

8. Verfahren nach Anspruch 7, **dadurch gekennzeichnet, dass** zunächst in einem ersten Schritt eine Schicht aus einem leichter zu fusionierenden Material und anschließend in einem zweiten Schritt ein schwerer zu fusionierendes Material aufgebracht wird.

9. Isolierender Keramik-Verbund-Werkstoff, **dadurch gekennzeichnet, dass** er elektrisch leitfähige Partikel enthält, die mit einem elektrisch isolierenden Material beschichtet sind, wobei die elektrisch leitenden Partikel aus Metallsiliziden bestehen.

10. Verwendung des isolierenden Keramik-Verbund-Werkstoffs nach Anspruch 9 als Isolationsschicht in einer Glühstiftkerze.

## Claims

1. Process for producing an insulating ceramic composite material from an electrically conducting precursor ceramic, wherein the precursor ceramic contains electrically conducting particles, **characterized in that** the electrically conducting particles are coated with an electrically insulating material, the electrically conducting particles consisting of metal silicides.

2. Process according to Claim 1, **characterized in that** the precursor ceramic is an amorphous SiOC ceramic obtained by pyrolysis of organoelement precursors.

3. Process according to Claim 1 or 2, **characterized in that** the insulating material is selected from the group consisting of ceramic, glass-ceramic and glass.

4. Process according to Claim 1 or 2, **characterized in that** the insulating material is selected from the group consisting of metal oxides and semimetal oxides.

5. Process according to Claim 4, **characterized in that** the insulating material is selected from the group consisting of SiO₂, Al₂O₃, TiO₂, ZrO₂ and Ta₂O₅.

6. Process according to Claim 1, **characterized in that** the metal silicide is molybdenum disilicide.

7. Process according to one of the preceding claims, **characterized in that** the coating is performed by mechanofusion.

8. Process according to Claim 7, **characterized in that** first of all, in a first step, a layer of a material that is easier to fuse is applied, and then, in a second step, a material that is more difficult to fuse is applied.

9. Insulating ceramic composite material, **characterized in that** it contains electrically conductive particles which are coated with an electrically insulating material, the electrically conducting particles consisting of metal silicides.

10. Use of the insulating ceramic composite material according to Claim 9 as an insulation layer in a sheathed-element glow plug.

## Revendications

1. Procédé de production d'un matériau composite céramique à partir d'une céramique précurseur électroconductrice, la céramique précurseur contenant des particules électroconductrices,
**caractérisé en ce que**
les particules électroconductrices, qui sont composées de siliciures de métaux, sont revêtues d'un matériau isolant.

2. Procédé selon la revendication 1,
**caractérisé en ce que**
la céramique précurseur est une céramique amorphe au SiOC obtenue par pyrolyse de précurseurs organométalliques.

3. Procédé selon la revendication 1 ou 2,
**caractérisé en ce que**
le matériau isolant est choisi dans le groupe constitué par la céramique, la vitrocéramique et le verre.

4. Procédé selon les revendications 1 ou 2,
**caractérisé en ce que**
le matériau isolant est choisi dans le groupe constitué par les oxydes de métaux et des oxydes de semi-métaux.

5. Procédé selon la revendication 4,
**caractérisé en ce que**
le matériau isolant est choisi dans le groupe constitué par SiO₂, Al₂O₃, TiO₂, ZrO₂ et Ta₂O₅.

6. Procédé selon la revendication 1,
**caractérisé en ce que**
le siliciure de métal est le disiliciure de molybdène.

7. Procédé selon l'une des revendications précédentes,
**caractérisé en ce que**
le revêtement est réalisé par mécanofusion.

8. Procédé selon la revendication 7,
**caractérisé en ce qu'**
on applique tout d'abord, dans une première étape, une couche de matériau relativement facile à faire fusionner puis, dans une deuxième étape, un matériau plus difficile à faire fusionner.

9. Matériau composite céramique isolant,
**caractérisé en ce qu'**
il contient des particules électroconductrices composées de siliciures de métal et revêtues d'un matériau isolant.

10. Utilisation du matériau composite céramique isolant selon la revendication 9, pour former une couche isolante dans une bougie à incandescence.
